# EUROPÄISCHE PATENTANMELDUNG

(11) **EP 3 050 643 A1**
(43) Veröffentlichungstag der Anmeldung: **03.08.2016**
(21) Anmeldenummer: 15153241.3
(22) Anmeldetag: 30.01.2015
(51) Int. Cl.: B22D 2/00, G01K 1/02, G01K 11/26, G01S 13/75

(54) **Metallindustrieanlage und Verfahren zur Überprüfung eines metallurgischen Gefäßes**

(71) Anmelder: Primetals Technologies Austria GmbH, 4031 Linz (AT)
(72) Erfinder: Profelt, Franz, 5723 Uttendorf (AT); Rohrhofer, Andreas, 4020 Linz (AT); Kuehas, Thomas, 4225 Luftenberg (AT); Weinzinger, Michael, 4020 Linz (AT)
(74) Vertreter: Metals@Linz

(57) **Zusammenfassung**

Die Erfindung betrifft eine Metallindustrieanlage umfassend ein Gefäß (1) und mehrere Verarbeitungsstationen, welche das Gefäß (1), insbesondere ein metallurgisches Gefäß (1), zumindest teilweise durchläuft, wobei das Gefäß (1) mit einem Transponder (2) mit Transponderdaten ausgerüstet ist, wobei in der Metallindustrieanlage zumindest eine erste Trackingposition, welche zumindest eine erste Lesestation (7) zum Kommunizieren des an der ersten Trackingposition vorbeifahrenden Gefäßes (1) mit Hilfe des Transponders (2), insbesondere zum Identifizieren des vorbeifahrenden Gefäßes (1) mit den Transponderdaten umfasst, vorgesehen ist, und wobei an der Lesestation (7) zumindest ein Mittel zur Messung der Außentemperatur der Lesestation (7) vorgesehen ist, so dass ein Anstieg der Außentemperatur durch ein an der ersten Trackingposition vorbeifahrendes Gefäß (1) feststellbar ist.

Zudem betrifft die Erfindung ein Verfahren, welches sich in der obigen Metallindustrieanlage durchführen lässt.

## Beschreibung

Die Erfindung betrifft eine Metallindustrieanlage umfassend ein Gefäß und mehrere Verarbeitungsstationen, welche das Gefäß, insbesondere ein metallurgisches Gefäß, zumindest teilweise durchläuft. Weiterhin betrifft die Erfindung ein Verfahren zur Überprüfung eines metallurgischen Gefäßes in einer Metallindustrieanlage mit mehreren Verarbeitungsstationen, welche das metallurgische Gefäß zumindest teilweise durchläuft.

In metallurgischen Industrieanlagen werden metallurgische Gefäße eingesetzt, um Roheisenschmelzen, Stahlschmelzen, flüssige Schlacken, Schrott und dergleichen zu transportieren. Zum Beispiel sind im Stahlwerk in den verschiedenen Anlagenteilen (z.B. Konverter, Elektrolichtofenbogen etc.) mehrere Gefäße (je nach Kapazität des Stahlwerks 30 und mehr) im Einsatz. Diese durchlaufen verschiedene Routen zwischen den Anlagenteilen. Die Anlagenbediener und Kranfahrer müssen sicherstellen, dass das richtige Gefäß am richtigen Anlagenort abgestellt ist. Sowohl aus dem Gesichtspunkt der Qualität (möglichst geringe Abkühlung des Roheisens/Stahlbades im Gefäß) als auch aus Energiespargründen, ist ein möglichst hoher Heißeinsatz von Gefäßen anzustreben. Die Gefäße im Stahlwerk werden z.B. beheizt, bevor Stahl aus dem Elektrolichtbogenofen/Konverter in sie geleert wird. Bestimmte Stahlqualitäten sollten außerdem nicht nacheinander im gleichen Gefäß transportiert werden, da die geringen Restmengen sich chemisch beeinflussen können (z.B. bestimmte Edelstahlgüten oder auch Stahllegierungen).

Aus diesem Grund werden die im Betrieb eingesetzten metallurgischen Gefäße an verschiedenen Trackingpositionen durch Transponder erfasst. Die so erfassten Informationen werden an ein gemeinsames Leitsystem weiter vermittelt. Je nach Größe des Werks können diese Trackingpositionen weit auseinander liegen. Trackingpositionen sind z.B. der Konverter, die Pfannenöfen, die Umleergrube, die Pfannenfeuer, etc.; metallurgische Gefäße bei einem Schlackenkübel sind der Lichtbogenofen und die Schlackengrube; Trackingpositionen bei einem Torpedowagen sind z.B. der Hochofen, die Umleergrube etc..

Bei den aktuell verwendeten Implementierungen werden lediglich die Daten von den Trackingpositionen ausgewertet. Eine Validierung der empfangenen Daten ist somit nicht möglich, da es kein weiteres System gibt, welches die empfangenen Daten hinsichtlich Plausibilität überprüft. Desweiteren ist es auch nicht so einfach möglich zu erkennen, ob der am metallurgischen Gefäß montierte Transponder noch funktionsfähig ist oder nicht. Wird beispielsweise eine Pfanne mit defektem Transponder an einer Trackingposition vorbeigeführt, kann diese durch das System nicht erkannt werden. Erhebliche Nachteile entstehen bis der Fehler gefunden wurde, z.B. weiß ein gekoppeltes Planungssystem nicht mehr, wo sich welche Pfanne befindet und zukünftig eingeplant werden kann.

Eine erste Aufgabe ist die Angabe einer Metallindustrieanlage mit mehreren Verarbeitungsstationen, zum vereinfachten Überprüfen eines Gefäßes, welches das oben genannte Problem löst. Die zweite Aufgabe betrifft ein vereinfachtes Verfahren zum Überprüfen eines Gefäßes, welches das oben genannte Problem löst.

Die erste Aufgabe wird gelöst durch die Angabe einer Metallindustrieanlage, umfassend ein Gefäß und mehrere Verarbeitungsstationen, welche das Gefäß, insbesondere ein metallurgisches Gefäß, zumindest teilweise durchläuft, wobei das Gefäß mit einem Transponder mit Transponderdaten, ausgerüstet ist, und wobei in der Metallindustrieanlage zumindest eine erste Trackingposition, welche zumindest eine erste Lesestation zum Kommunizieren des an der ersten Trackingposition vorbeifahrenden Gefäßes mit Hilfe des Transponders, insbesondere zum Identifizieren des vorbeifahrenden Gefäßes mit den Transponderdaten, umfasst, vorgesehen ist und wobei an der Lesestation zumindest ein Mittel zur Messung der Außentemperatur der Lesestation vorgesehen ist, so dass ein Anstieg der Außentemperatur durch ein an der ersten Trackingposition vorbeifahrendes Gefäß feststellbar ist.

Die zweite Aufgabe wird gelöst durch die Angabe eines Verfahrens zur Überprüfung eines metallurgischen Gefäßes in einer Metallindustrieanlage umfassend ein Gefäß und mehrere Verarbeitungsstationen, welche das metallurgische Gefäß zumindest teilweise durchläuft, wobei das metallurgische Gefäß mit einem Transponder mit Transponderdaten, ausgerüstet wird, und wobei das an einer ersten Trackingposition vorbeifahrende Gefäß mit Hilfe des Transponders mit der ersten Trackingposition, umfassend zumindest eine Lesestation, kommuniziert, insbesondere das vorbeifahrende Gefäß mit den Transponderdaten identifiziert wird, und wobei an der Lesestation zumindest ein Mittel zur Messung der Außentemperatur der Lesestation angebracht wird, so dass ein Anstieg der Außentemperatur durch ein an der ersten Trackingposition vorbeifahrendes Gefäß festgestellt wird.

Aktuell eingesetzte Realisierungen zur Verfolgung und Überprüfung von metallurgischen Gefäßen stützen sich lediglich auf die empfangenen Daten von Trackingposition und weisen keine Messwertvalidierung auf. Erfindungsgemäß werden nun eine Metallindustrieanlage und ein Verfahren zur Überprüfung eines Gefäßes (z.B. für Pfannen, Schlackekübel, etc.) basierend auf einem Transponder und einer Lesestation angegeben, bei welchem die Außentemperatur rund um die Lesestation, insbesondere an der Antenne, erfasst wird. Wird ein Gefäß mit Transponder an solch einer Trackingposition vorbeigeführt, wird dies durch die dort installierte Lesestation erkannt. Desweiteren tritt durch die hohe äußere Oberflächentemperatur des Gefäßes auch ein Außentemperaturanstieg an der Lesestation, insbesondere der Antenne, auf. Dieser Außentemperaturanstieg wird durch das installierte Mittel, hier beispielsweise durch einen Temperatursensor, erfasst. Mithilfe dieser Außentemperaturdaten können verschiedene Informationen hinsichtlich der Erkennung eines vorbeifahrenden Gefäßes mit hoher Außentemperatur, des Transponderzustands, etc., abgeleitet werden. So kann eine Validierung der erkannten Transponder erfolgen. Auch können defekte Transponder erkannt werden. Ebenso erfolgt eine Überwachung der an der Lesestation, insbesondere an der Antenne, auftretenden Außentemperatur und bedarfsweise die Alarmierung eines Instandhalters. Zudem kann die Anbindung an ein Content-Management-System (Inhaltsverwaltungssystem), beispielsweise zur Speicherung oder Anbindung an ein Condition Monitoring System (CMS, Zustandsüberwachungssystem), welches auf einer regelmäßigen oder permanenten Erfassung des Gefäßzustandes durch Messung und Analyse basiert, erfolgen.

Durch die Erfindung kann bei defekten Transpondern das Bedienpersonal vorteilhafterweise automatisch aufgefordert werden, die Gefäßnummer manuell per Hand einzugeben. Auch können so beispielsweise Reparaturaufträge automatisch generiert werden. Da die Zuverlässigkeit durch dieses gekoppelte Planungssystem steigt, können die Gefäße zukünftig optimal verplant werden.

In den Unteransprüchen sind weitere vorteilhafte Maßnahmen aufgelistet, die beliebig miteinander kombiniert werden können, um weitere Vorteile zu erzielen.

Bevorzugt umfasst die Lesestation zumindest eine Antenne zum Kommunizieren mit dem Transponder und ein Lesegerät, wobei die Messung der Außentemperatur durch eine Messung der Außentemperatur der Antenne vorgesehen ist. Hier lässt sich der Anstieg der Außentemperatur besonders gut messen, da die Antenne dem Transponder zugewandt ist. Außerdem weist die Antenne eine schnelle Reaktionszeit in Bezug auf einen Temperaturanstieg auf.

Bevorzugt ist das zumindest eine Mittel zur Außentemperaturmessung der Antenne an oder im Bereich der Antenne vorgesehen, so dass eine Außentemperaturmessung der Antenne ermöglicht wird. Dort angebracht, lässt sich die Außentemperatur der Antenne besonders gut messen.

Auch kann die Antenne ein Hitzeschild aufweisen und das zumindest eine Mittel zur Außentemperaturmessung der Antenne an einer dem Transponder zugewandten Seite am Hitzeschild oder einem dem Transponder zugewandten Bereich des Hitzeschilds vorgesehen sein. Dadurch wird eine Außentemperaturmessung ermöglicht.

Bevorzugt umfasst die Lesestation zumindest ein Auswertesystem mit einer Schnittstelle, welches die erfassten Transponderdaten als auch die durch das zumindest eine Mittel gemessene Außentemperatur auswertet, wobei zumindest die Auswertung über die Schnittstelle weitergeleitet wird.

Dabei kann das Auswertesystem über die Schnittstelle mit einem Prozessleitsystem oder einem Level 2 verbunden werden. Das Auswertesystem wertet die vom Lesegerät erfassten Transponderdaten gemeinsam mit der rund um die Lesestation, insbesondere an der Antenne, auftretenden Außentemperatur aus. Die validierten Daten werden anschließend über die Schnittstelle an ein Prozessleitsystem weiter gesendet. Alle weiteren in der Anlage installierten Lesestationen können ebenso verfahren.

Bevorzugt umfasst das zumindest eine Mittel zumindest einen Temperatursensor, insbesondere ein Thermoelement und/oder Messwiderstände PT 100. Es können jedoch auch andere, geeignete Temperatursensoren verwendet werden.

In bevorzugter Ausgestaltung ist die Lesestation als ein Funk-Kommunikationsgerät, insbesondere als ein weiterer Transponder, ausgestaltet. Auch kann das zumindest eine Mittel zur Außentemperaturmessung ein in das Funk-Kommunikationsgerät integrierter Temperatursensor sein. Der Einsatz von Transpondern mit eingebauten Temperatursensoren ist daher ebenfalls möglich, beispielsweise ein SAW oder Passive-RFID-Transponder mit Temperatursensor als auch jeder andere geeignete RFID Transponder.

In einer bevorzugten Ausgestaltung erfolgt ein Messen der Außentemperatur der Lesestation, insbesondere der Antenne der Lesestation, durch einen Temperatursensor, wobei eine Überschreitung der maximal zulässigen Temperatur gemeldet wird. Dadurch kann beispielsweise ein zunehmender Verschleiß der Pfannenausmauerung erkannt werden. Wird ein von der Jahreszeit abhängiger Grenzwert überschritten, kann eine Warnung ausgegeben werden.

In einer bevorzugten Ausgestaltung erfolgt ein Messen der Außentemperatur der Lesestation, insbesondere der Antenne, durch einen Temperatursensor, wobei bei einem Anstieg der Außentemperatur und gleichzeitigem Fehlen der Kommunikation mit dem Transponder eine Benachrichtigung erfolgt. D.h. es wird ein charakteristischer Temperaturanstieg erkannt, aber keine Detektion eines Transponders. Dadurch kann auf einen defekten oder nicht vorhandenen/verlorenen Transponder geschlossen werden und es können entsprechende Maßnahmen veranlasst werden.

Vorteilhafterweise erfolgt bei Fehlen des Anstiegs der Außentemperatur, durch das Messen der Außentemperatur der Lesestation und gleichzeitiger Kommunikation mit dem Transponder, eine Warnung. Dadurch kann beispielsweise erkannt werden, ob sich ein Transponder vom Gefäß gelöst hat und sich im Lesebereich der Antenne befindet.

In vorteilhafter Ausgestaltung umfasst die Lesestation zumindest ein Auswertesystem mit einer Schnittstelle, welches sowohl die erfassten Transponderdaten als auch die durch das zumindest eine Mittel gemessene Außentemperatur auswertet und zumindest die Auswertung über die Schnittstelle an ein Gateway und/oder eine Prozessleitstelle weiterleitet.

Bevorzugt erfolgt die Versorgung der zumindest einen Lesestation mit elektrischer Energie durch eine Batterie und/oder durch Energy Harvesting. Die einzelnen Lesestationen werden vorzugsweise von einer Batterie versorgt. In diesem Fall ist die Lesestation vollkommen kabellos. Regelmäßige Batteriewechsel müssen in diesem Fall eingeplant werden. Ist dieser Batteriewechsel nicht erwünscht, kann eine kabelgebundene Spannungsversorgung der Lesestation vorgesehen werden. Eine Energieversorgung über Energy Harvesting ist ebenfalls denkbar. Wird die Spannungsversorgung als Batterie ausgeführt, kann beispielsweise das Auswertesystem so ausgeführt werden, dass sie die Spannungsversorgung mit überwacht, z.B. hinsichtlich Batterietemperatur, Spannung und Stromstärke. Stellt das Auswertesystem fest, dass die Batterie einen kritischen Zustand erreicht, kann der Bediener über die Benutzersteuerung benachrichtigt werden. Genauso vorstellbar ist, dass das Auswertesystem ein verbundenes Condition Monitoring System alarmiert oder in einem Content-Management-System (Inhaltsverwaltungssystem) einen Instandhaltungsauftrag erzeugt. Insbesondere kann es sich bei der Metallindustrieanlage um eine metallurgische Industrieanlage, insbesondere ein Stahlwerk, handeln. Die Metallindustrieanlage ist dazu geeignet, das erfindungsgemäße Verfahren durchzuführen.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- FIG 1: schematisch eine erfindungsgemäße Lesestation und ein Gefäß mit Transponder,
- FIG 2: einen Temperaturverlauf rund um eine Antenne eines Trackingsystems.

Obwohl die Erfindung im Detail durch das bevorzugte Ausführungsbeispiel näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

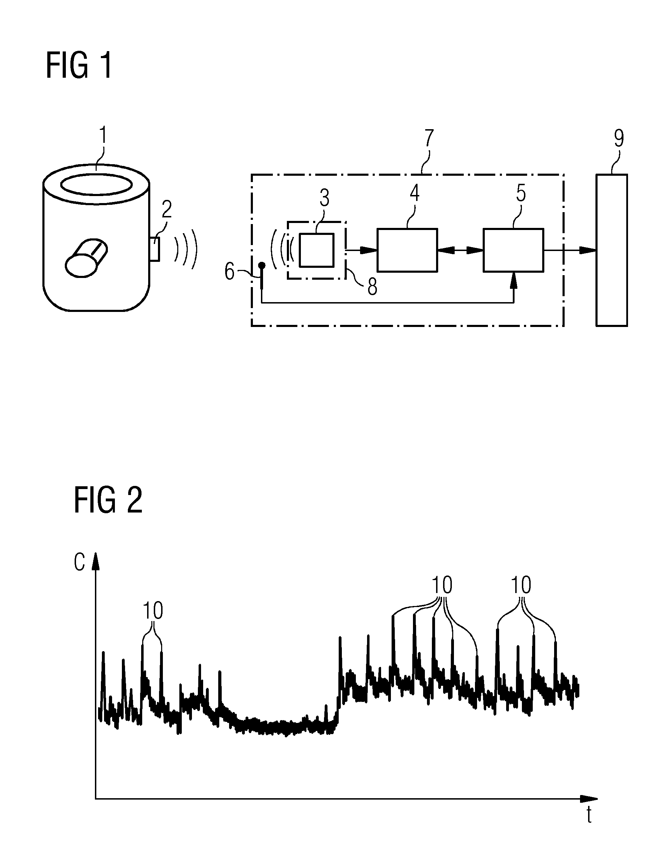

In einer Metallindustrieanlage werden die Gefäße 1 mit einem Transponder 2 ausgestattet, siehe FIG 1. Dieser Transponder 2 kann fest oder lose mit dem Gefäß 1 verbunden sein. Dabei kann es sich bei den Transpondern 2 um SAW, RFID oder einen anderen geeigneten Transponder handeln. An mehreren Orten innerhalb eines Werksgeländes oder auch außerhalb des Werksgeländes befinden sich sog. Trackingpositionen (nicht gezeigt), an denen die Anwesenheit des Gefäßes 1 durch eine Lesestation 7 erkannt und das Gefäß 1 überwacht wird. FIG 1 zeigt eine solche Lesestation 7. Diese besteht aus einer Antenne 3, einem Lesegerät 4 und einem Auswertesystem 5 mit einer Schnittstelle zu einem Prozessleitsystem (nicht gezeigt) oder einem Level 2 (nicht gezeigt). Das Auswertesystem 5 wertet die vom Lesegerät 4 erfassten Transponderdaten gemeinsam mit der rund um die Antenne auftretenden Außentemperatur aus. Mithilfe dieser Temperaturdaten können verschiedene Informationen hinsichtlich der Erkennung eines vorbeifahrenden Gefäßes 1 mit hoher Außentemperatur, abgeleitet werden.

Die validierten Daten werden anschließend über eine Schnittstelle an ein Prozessleitsystem 9 weiter gesendet. Alle weiteren in der Anlage installierten Lesestationen 7 tun dies ebenso.

Zur Erfassung der Außentemperatur vor der Antenne 3 können Thermoelemente 6, Messwiderstände z.B. PT 100 oder andere Temperatursensoren, verwendet werden. Der Einsatz von Transpondern mit eingebauten Temperatursensoren ist ebenfalls möglich, z.B. SAW oder Passive RFID Transponder mit Temperatursensor.

Dabei kann die Außentemperatur an oder um jede Stelle der Antenne gemessen werden. Es muss lediglich eine repräsentative Stelle gefunden werden, welche auch einen Anstieg in der Außentemperatur liefert, wenn ein Gefäß 1, z.B. eine Pfanne, vorbeigeführt wird. Wird die Antenne 3 mit einem Hitzeschild 8 vor extremen Umgebungsbedingungen geschützt, ist es vorteilhaft, die Außentemperatur nicht direkt an der Antenne 3, sondern außerhalb des Hitzeschildes 8 an einer der Transponder 2 zugewandten Seite am Hitzeschild 8 oder einem dem Transponder 2 zugewandten Bereich des Hitzeschilds 8 zu messen.

Fig. 2 stellt einen Temperaturverlauf rund um eine Antenne 3 einer Trackingposition dar. Hierbei ist die Außentemperatur in Celsius C über der Zeit t aufgetragen. Jeder Peak 10 repräsentiert hierbei ein vorbeigeführtes heißes Gefäß 1 (FIG 1). Wird ein Gefäß 1 (FIG 1) mit Transponder 2 (FIG 1) an solch einer Trackingposition vorbeigeführt, wird dies durch die dort installierte Lesestation 7 (FIG 1) erkannt. Desweiteren tritt durch die hohe äußere Oberflächentemperatur des Gefäßes 1 (FIG 1) auch ein Temperaturanstieg an der Antenne 3 (FIG 1) auf. Dieser Temperaturanstieg wird durch den installierten Temperatursensor 6 (FIG 1) erfasst und an das Auswertesystem 5 (FIG 1) weitergegeben.

Wird dabei ein charakteristischer Temperaturanstieg erkannt, aber keine Detektion eines Transponders 2 (FIG 1), kann dadurch auf einen defekten oder nicht vorhandenen/verlorenen Transponder 2 (FIG 1) oder falls der Transponder 2 (FIG 1) einen Tag aufweist, auf einen verlorenen Tag, geschlossen werden. Das Bedienpersonal kann dann über beispielsweise ein Automatisierungssystem (nicht gezeigt) aufgefordert werden, die Gefäßnummer in den nächsten Bearbeitungsstationen manuell per Hand am Human-Machine-Interface einzugeben. Dabei weist jedes Gefäß 1 (FIG 1) eine einzigartige aufgedruckte/aufgemalte Nummer, die Gefäßnummer, auf. Die Information eines defekten Transponders 2 (FIG 1) kann auch an ein verbundenes Condition Monitoring System (CMS) bzw. ein Instandhaltungs-Management-System gemeldet, und ein automatischer Reparaturauftrag initiiert werden.

Auch kann über das Lesegerät 4 (FIG 1) ein Transponder 2 (FIG 1) detektiert werden. Über die Validierung der Außentemperatur an der Antenne 3 (FIG 1) kann eine Aussage getroffen werden, ob auch tatsächlich ein metallurgisches Gefäß 1 (FIG 1) an der Lesestation 7 (FIG 1) vorbeigeführt wird. In diesem Fall muss ein signifikanter Temperaturanstieg detektiert werden. Tritt dieser nicht auf, könnte sich ebenfalls der Transponder 2 (FIG 1) vom Gefäß 1 (FIG 1) gelöst haben und sich im Lesebereich der Antenne 3 (FIG 1) befinden. Die Information kann einem Instandhalter oder dem Wartungspersonal gemeldet werden, und ein automatischer Reparaturauftrag initiiert werden.

Auch kann dadurch eine Überwachung des Zustandes der Pfannenausmauerung erfolgen. Steigen nämlich die Spitzen der detektierten Peaks 10 an der Antenne 3 (FIG 1) im Laufe der Zeit an, so ist dies auf einen zunehmenden Verschleiß, beispielsweise der Pfannenausmauerung, zurückzuführen. Wird ein von der Jahreszeit abhängiger Grenzwert überschritten, kann eine Warnung ausgegeben werden. Die Information einer sich verschlechternden Ausmauerung kann ebenfalls an ein verbundenes Condition Monitoring System (CMS) bzw. ein Instandhaltungs-Management-System gemeldet, und ein automatischer Reparaturauftrag initiiert werden.

Auch kann vom Auswertesystem 5 (FIG 1) eine Überschreitung der maximal zulässigen Temperatur festgestellt werden. In diesem Fall kann von einer erhöhten thermischen Belastung auf den Transponder 2 (FIG 1) und dessen Lebensdauer ausgegangen und eine Warnung ausgegeben werden. Tritt dies mehrmals auf, kann dies einem angebundenen Condition Monitoring System (CMS) bzw. einem Instandhaltungs-Management-System gemeldet werden. Dabei kann ein solches mehrmaliges Auftreten z.B. durch Erhöhen eines Zählers bei jedem Auftreten erkannt werden.

Die Erfindung betrifft ein Gefäß 1 (FIG 1), z.B. für Pfannen, Schlackekübel, etc. mit einem Transponder 2 (FIG 1) und einer Lesestation 7 (FIG 1), bei welcher die Außentemperatur rund um die Antenne 3 (FIG 1) erfasst wird. Mithilfe dieser Temperaturdaten können verschiedene Informationen hinsichtlich der Erkennung eines vorbeifahrenden Gefäßes 1 (FIG 1) mit hoher Außentemperatur, beispielsweise des Transponderzustands, etc. abgeleitet werden.

Die Erfindung ist bevorzugt anwendbar bei Gefäßen 1 (FIG 1) mit hoher Außentemperatur, welche einen merklichen Temperaturunterschied zur Umgebung aufweisen. Beispielsweise sind dies Gießpfannen, Eisenpfannen, Verteiler oder Schlackekübel, welche eine äußeren Oberflächentemperaturen von ca. 200°C aufweisen.

Die Erfindung ist bevorzugt in Stahlwerken einsetzbar, aber nicht auf diese beschränkt.

### Bezugszeichenliste

- 1: Gefäß
- 2: Transponder
- 3: Antenne
- 4: Lesegerät
- 5: Auswertesystem
- 6: Temperatursensor
- 7: Lesestation
- 8: Hitzeschild
- 9: Prozessleitsystem
- 10: Peaks

- t: Temperatur
- C: Celsius

## Patentansprüche

1. Metallindustrieanlage umfassend ein Gefäß (1) und mehrere Verarbeitungsstationen, welche das Gefäß (1), insbesondere ein metallurgisches Gefäß (1), zumindest teilweise durchläuft,
**dadurch gekennzeichnet,** d a s s
das Gefäß (1) mit einem Transponder (2) mit Transponderdaten ausgerüstet ist,
wobei in der Metallindustrieanlage zumindest eine erste Trackingposition, welche zumindest eine erste Lesestation (7) zum Kommunizieren des an der ersten Trackingposition vorbeifahrenden Gefäßes (1) mit Hilfe des Transponders (2), insbesondere zum Identifizieren des vorbeifahrenden Gefäßes (1) mit den Transponderdaten umfasst, vorgesehen ist,
und wobei an der Lesestation (7) zumindest ein Mittel zur Messung der Außentemperatur der Lesestation (7) vorgesehen ist, so dass ein Anstieg der Außentemperatur durch ein an der ersten Trackingposition vorbeifahrendes Gefäß (1) feststellbar ist.

2. Metallindustrieanlage umfassend ein Gefäß (1) und mehrere Verarbeitungsstationen,
**dadurch gekennzeichnet, dass**
die Lesestation (7) zumindest eine Antenne (3) zum Kommunizieren mit dem Transponder (2) und ein Lesegerät (4) umfasst und wobei die Messung der Außentemperatur durch eine Messung der Außentemperatur der Antenne (3) vorgesehen ist.

3. Metallindustrieanlage umfassend ein Gefäß (1) und mehrere Verarbeitungsstationen nach Anspruch 2,
**dadurch gekennzeichnet, dass**
das zumindest eine Mittel zur Außentemperaturmessung der Antenne (3) an oder im Bereich der Antenne (3) vorgesehen ist, so dass eine Messung der Außentemperatur der Antenne (3) ermöglicht wird.

4. Metallindustrieanlage umfassend ein Gefäß (1) und mehrere Verarbeitungsstationen nach Anspruch 3,
**dadurch gekennzeichnet, dass**
die Antenne (3) ein Hitzeschild (8) aufweist und das zumindest eine Mittel zur Messung der Außentemperatur der Antenne (3) an einer der Transponder (2) zugewandten Seite am Hitzeschild (8) oder einem dem Transponder (8) zugewandten Bereich des Hitzeschilds (2) vorgesehen ist.

5. Metallindustrieanlage umfassend ein Gefäß (1) und mehrere Verarbeitungsstationen nach einem der vorhergehenden Ansprüche,
**dadurch gekennzeichnet, dass**
die Lesestation (7) zumindest ein Auswertesystem (5) mit einer Schnittstelle umfasst, welches die erfassten Transponderdaten als auch die durch das zumindest eine Mittel gemessene Außentemperatur auswertet und zumindest die Auswertung über die Schnittstelle weiterleitet.

6. Metallindustrieanlage umfassend ein Gefäß (1) und mehrere Verarbeitungsstationen, nach einem der vorhergehenden Ansprüche,
**dadurch gekennzeichnet, dass**
das zumindest eine Mittel zumindest einen Temperatursensor, insbesondere ein Thermoelement(6) und/oder Messwiderstände, umfasst.

7. Metallindustrieanlage umfassend ein Gefäß (1) und mehrere Verarbeitungsstationen nach einem der vorhergehenden Ansprüche,
**dadurch gekennzeichnet, dass**
die Lesestation (7) als ein Funk-Kommunikationsgerät, insbesondere als ein weiterer Transponder, ausgestaltet ist.

8. Metallindustrieanlage umfassend ein Gefäß (1) und mehrere Verarbeitungsstationen nach Anspruch 7,
**dadurch gekennzeichnet, dass**
das zumindest eine Mittel zur Außentemperaturmessung ein in das Funk-Kommunikationsgerät ein integrierter Temperatursensor ist.

9. Metallindustrieanlage umfassend ein Gefäß (1) und mehrere Verarbeitungsstationen nach einem der vorhergehenden Ansprüche, wobei es sich bei der Metallindustrieanlage um eine metallurgische Industrieanlage, insbesondere ein Stahlwerk, handelt.

10. Verfahren zur Überprüfung eines metallurgischen Gefäßes (1) in einer Metallindustrieanlage umfassend ein Gefäß (1) und mehrere Verarbeitungsstationen, welche das metallurgische Gefäß (1) zumindest teilweise durchläuft,
**dadurch gekennzeichnet, dass**
das metallurgische Gefäß (1) mit einem Transponder (2) mit Transponderdaten ausgerüstet wird, wobei das an einer ersten Trackingposition vorbeifahrende Gefäß (1) mit Hilfe des Transponders (2) mit der ersten Trackingposition, umfassend zumindest eine Lesestation (7), kommuniziert, insbesondere das vorbeifahrende Gefäß (1) mit den Transponderdaten identifiziert wird, und wobei an der Lesestation (7) zumindest ein Mittel zur Messung der Außentemperatur der Lesestation (7) angebracht wird, so dass ein Anstieg der Außentemperatur bei einem an der ersten Trackingposition vorbeifahrenden Gefäß (1) festgestellt wird.

11. Verfahren zur Überprüfung eines metallurgischen Gefäßes (1) nach Anspruch 10,
**dadurch gekennzeichnet, dass**
das zumindest eine Mittel an der Antenne (3) angebracht wird.

12. Verfahren zur Überprüfung eines metallurgischen Gefäßes (1) nach einem der Ansprüche 10 bis 11,
**dadurch gekennzeichnet, dass**
ein Messen der Außentemperatur der Lesestation (7), insbesondere der Antenne (3), durch einen Temperatursensor erfolgt und eine Überschreitung der maximal zulässigen Temperatur gemeldet wird.

13. Verfahren zur Überprüfung eines metallurgischen Gefäßes (1) nach einem der Ansprüche 10 bis 12,
**dadurch gekennzeichnet, dass**
ein Messen der Außentemperatur der Lesestation (7), insbesondere der Antenne (3), durch einen Temperatursensor, erfolgt, wobei bei einem Anstieg der Außentemperatur und gleichzeitigem Fehlen der Kommunikation mit dem Transponder (2) eine Benachrichtigung erfolgt.

14. Verfahren zur Überprüfung eines metallurgischen Gefäßes (1) nach einem der Ansprüche 10 bis 13,
**dadurch gekennzeichnet, dass**
bei Fehlen des Anstiegs der Außentemperatur durch das Messen der Außentemperatur der Lesestation (7), und gleichzeitiger Kommunikation mit dem Transponder (2), eine Warnung erfolgt.

15. Verfahren zur Verfolgung eines metallurgischen Gefäßes (1) nach einem der Ansprüche 10 bis 14,
**dadurch gekennzeichnet, dass**
die Lesestation (7) zumindest ein Auswertesystem (5) mit einer Schnittstelle umfasst, welches die erfassten Transponderdaten als auch die durch das zumindest eine Mittel gemessene Außentemperatur auswertet und zumindest die Auswertung über die Schnittstelle an ein Gateway und/oder eine Prozessleitstelle weiterleitet.

16. Verfahren zur Verfolgung eines metallurgischen Gefäßes (1) nach einem der Ansprüche 10 bis 15,
**dadurch gekennzeichnet, dass**
die Versorgung der zumindest einen Lesestation (7) mit elektrischer Energie durch eine Batterie und/oder durch Energy Harvesting erfolgt.

17. Verfahren zur Verfolgung eines metallurgischen Gefäßes (1) nach einem der Ansprüche 11 bis 16, welches in einer Metallindustrieanlage nach einem der oben genannten Ansprüche 1-10 durchgeführt wird.
